# EUROPÄISCHE PATENTSCHRIFT

(11) **EP 3 476 006 B1**
(45) Veröffentlichungstag und Bekanntmachung des Hinweises auf die Patenterteilung: **13.01.2021**
(21) Anmeldenummer: 17749163.6
(22) Anmeldetag: 28.07.2017
(51) Int. Cl.: H01R 4/34, H01R 4/30, F16B 37/06, H01R 4/38, H01R 25/16

(54) **ANORDNUNG UMFASSEND EINE KUPFERSTROMSCHIENE UND EINE SETZMUTTER**
ASSEMBLY COMPRISING A COPPER BUSBAR AND A FIXING NUT
ENSEMBLE COMPRENANT UNE BARRE CONDUCTRICE EN CUIVRE ET UN ÉCROU DE FIXATION

(30) Priorität: 16.09.2016 EP 16189125
(43) Veröffentlichungstag der Anmeldung: 01.05.2019
(73) Patentinhaber: Siemens Aktiengesellschaft, 80333 München (DE)
(72) Erfinder: KNEISSL, Philipp, 90768 Fürth (DE)
(86) Internationale Anmeldenummer: PCT/EP2017/069187
(87) Internationale Veröffentlichungsnummer: WO 2018/050344

(56) Entgegenhaltungen:
- JP-A- H09 161 890
- US-A- 5 439 398
- US-A1- 2010 319 979
- US-A1- 2014 369 788
- US-A1- 2015 064 989

## Beschreibung

Die Erfindung betrifft eine Anordnung umfassend eine Kupferstromschiene und eine Setzmutter. Ferner betrifft die Erfindung ein Kontaktsystem mit einer solchen Anordnung, einem Kabelschuh und einer Schraubverbindung, wobei die Schraubverbindung die Setzmutter und eine Schraube umfasst. Weiter betrifft die Erfindung einen Stromrichter mit einer solchen Anordnung oder einem solchen Kontaktsystem.

Kupferstromschienen dienen dazu, hohe Ströme verlustarm zu leiten. Der Vorteil des Kupfers liegt dabei in seinem guten Leitwert. Kupferstromschienen kommen vielfach in Stromrichtern zum Einsatz, da eine Kupferstromschiene nur eine geringe Induktivität aufweist und damit schnelle Schaltvorgänge im Stromrichter realisierbar sind. Darüber hinaus ist es in Stromrichtern mit diskreten Bauelementen, wie beispielsweise Halbleiterschaltern, oftmals erforderlich, einen Kabelschuh auf der Kupferstromschiene anzubinden, um eine Kabelverbindung elektrisch zu kontaktieren.

Aus dem Stand der Technik ist der Einsatz von Furchschrauben bekannt. Durch das Einschrauben der Furchschraube in die Kupferstromschiene wird durch Materialverdrängung ein Gewinde in der Kupferstromschiene hergestellt.

Ebenso ist die Verwendung von Einpressgewindebolzen möglich. Diese haben eine nicht zu vernachlässigenden Bauhöhe, die in vielen Anwendungsfällen nachteilig ist. Darüber hinaus lassen die hohen Herstellkosten den Einsatz von Einpressgewindebolzen oftmals unwirtschaftlich erscheinen. Zusätzlich sind Kombimutter immer nur begrenzt mit Kabelschuhen einsetzbar, da die Auflagefläche der Spannscheibe gesondert betrachtet werden muss.

Durchsteck-Verschraubungen als weitere Alternative sind teuer in der Herstellung und die Einbaulage in der Montage ist nicht ausreichend zugänglich.

Darüber hinaus birgt das Auffädeln von Scheiben große Probleme in der Montage und der Qualität, wodurch Zwischenlösungen mit den oben aufgezählten Mitteln, die aus dem Stand der Technik bekannt sind, und zusätzlichen Scheiben nicht möglich sind.

Aus der US 5 439 398 A ist eine Befestigungsanordnung zum Sicherstellen einer zuverlässigen elektrischen Verbindung eines elektrischen Steckverbinders eines Leistungstransistors mit einem metallisierten Abschnitt einer zugeordneten Leiterplatte bekannt. Die Befestigungsanordnung umfasst eine obere und eine untere Klemme, die so dimensioniert sind, dass sie sich zwischen der Transistorlasche befinden. Die Klemmanordnung verwendet dabei eine Maschinenschraube und eine zugeordnete Tellerfeder, um diese Verbindung aufrechtzuerhalten, selbst wenn sich die Komponenten ausdehnen und zusammenziehen.

Aus der JP H09 161890 A ist ein Verfahren zum Befestigen der elektrischen Kontaktfläche eines leitenden Verbindungselements bekannt. Dieser eignet sich für die Anwendung, wenn der elektrische Widerstand durch Oxidation und Korrosion oder Druckreduzierung (Kontaktkraft) der elektrischen Kontaktfläche erhöht wird. Dazu hat diese Vorrichtung einen Leiter mit einem zylindrischen ausgesparten Teil mit einer elektrischen Verbindungsfläche, die durch Bohren eines kreisförmigen Lochs in der Mitte ringförmig ausgebildet ist, und einen Leiter mit einem zylindrischen vorspringenden Teil, der an dem zylindrischen ausgesparten Teil angebracht ist. Der zylindrisch ausgesparte Teil und der zylindrisch vorstehende Teil werden dabei gegeneinander gedrückt, um die Leiter elektrisch miteinander zu verbinden.

Aus der US 2015/064989 A1 ist ein Eingriffsvorsprung mit einer konvexen konischen Oberfläche bekannt, die in einem äußeren Umfangsbereich eines Bolzeneinführungslochs in einem elektrischen Kontaktteil einer Anschlussklemme angeordnet ist. Dazu ist eine Eingriffsdämpfung mit einer konkaven konischen Oberfläche bekannt, die der konvexen konischen Oberfläche entspricht und in der Lage ist, mit dem Eingriffsvorsprung durch die konkave konische Oberfläche in Eingriff zu treten.

Der Erfindung liegt die Aufgabe zugrunde, eine Kupferstromschiene hinsichtlich ihrer Kontaktierbarkeit mit einem Kabelschuh zu verbessern.

Die Aufgabe wird durch die Gegenstände der Ansprüche 1, 6 und gelöst.

Weitere vorteilhafte Ausgestaltungen der Erfindung sind in den restlichen abhängigen Ansprüchen angegeben.

Der Erfindung liegt die Erkenntnis zugrunde, dass sich durch das Einbringen eines Stufenlochs in die Kupferstromschiene einfach und zuverlässig eine elektrische Verbindung zwischen Kabelschuh und Kupferstromschiene mittels einer Verschraubung herstellen lässt. Das Stufenloch hat dabei drei Bereiche, an denen das Loch zumindest abschnittsweise einen unterschiedlichen Radius aufweist. Der zweite Bereich weist einen konstanten Radius auf: Dies dient der Führung der Einpressmutter in die Kupferstromschiene. Darüber hinaus wird die Einpressmutter in der Kupferstromschiene zentriert. Der erste Bereich hat vor dem Einpressen der Setzmutter einen Radius der kleiner oder gleich ist wie der zweite Radiuswert. Der dritte Bereich, der an der zweiten Oberfläche der Kupferstromschiene endet, an der auch der Kabelschuh befestigt wird und an der der Kabelschuh die Kupferstromschiene elektrisch kontaktiert, hat einen geringeren Radius als der erste und der zweite Bereich. Dieser kleine Radius, insbesondere an der zweiten Oberfläche der Kupferstromschiene, ermöglicht eine gute und sichere Kontaktierung mit einer entsprechenden Kraft ohne aufgrund eines zu großen Lochs an der Oberfläche der Kupferstromschiene den Kabelschuh unzulässig zu verbiegen oder übermäßig zu deformieren. Um den Einsatz von Setzmuttern zu ermöglichen, ist es besonders vorteilhaft, wenn an der Auflagefläche für den Kabelschuh ein kleinerer Durchmesser vorliegt als auf der Einpressseite der Setzmutter. Dies wird durch das Stufenloch erreicht, welches beispielsweise auf herkömmlichen Stanzmaschinen hergestellt werden kann.

Im Gegensatz zu einer Lösung mit einem direkt in das Kupfer geschnittenen Gewinde kann mit der erfindungsgemäßen Lösung eine Mindestklemmlänge und eine Mindesteischraubtiefe eingehalten werden. Diese können über eine entsprechende Gewindelänge der Einpressmutter sichergestellt werden. Das Einhalten der Mindestklemmlänge und der Mindesteischraubtiefe ist bei einem geschnittenen Gewinde in Verbindung mit einer eingesetzten Kombischraube, auch bezeichnet als Schraube mit unverlierbaren Unterlegteilen, nicht in jedem Fall möglich, sondern von der Dicke der Kupferschiene abhängig.

Im Vergleich zu einer Durchzugsgeometrie mit angeprägter Senkung ist die erfindungsgemäße Kupferstromschiene deutlich weniger komplex, da sie in der Herstellung mit deutlich geringeren Toleranzen behaftet ist. Ebenso entfällt die Verwendung unterschiedlicher Werkzeuge aufgrund von unterschiedlichen Materialstärken. Somit kann eine sichere Fertigung auch an verschiedenen Standorten oder von unterschiedlichen Zulieferern gewährleistet werden.

Das Kontaktsystem mit einer solchen Kupferstromschiene mit Stufenloch, einem Kabelschuh und einer Schraubverbindung erfüllt darüber hinaus typische Anforderungen an eine solche Schraubverbindung. Eine Deformation und Material-Fließen in den Kabelschuhen kann bei dieser Lösung zuverlässig ausgeschlossen werden.

Die Kupferstromschiene mit Stufenloch hat zahlreiche Vorteile. Bisher mussten auf Setzmuttern entweder Scheiben unter den Kabelschuh gelegt werden oder der Einsatz war gar nicht erlaubt, wenn nicht ein zweites Bauteil mit verschraubt wurde. Die Kupferstromschiene mit Stufenloch ermöglicht den direkten und wirtschaftlichen Einsatz der Setzmuttern direkt mit Kombischrauben. Die Verbindung ist dabei günstiger und sicherer als die aus dem Stand der Technik bekannte Durchzugsgeometrie, da sie weniger Fertigungsschritte auf der Stanzmaschine umfasst. Es ist kein Durchzug vorhanden, der den Richtprozess erschwert. Durch das spätere Setzen der Mutter ist das Richten einfacher. Dies wird darüber hinaus erleichtert, da keine Masken nötig sind. Zudem ist die Ausfallrate geringer als mit Furchschrauben. Die Geometrie ist robuster gegen umliegende Features, wie beispielsweise Biegungen im Blech. Schwankungen in der Materialhärte werden zudem problemlos toleriert und die Toleranzen der Löcher sind deutlich weiter. Weiter können die Schrauben mit einem Standarddrehmoment für weiche Werkstoffe angezogen werden und müssen nicht, wie beispielsweise bei den Furchschrauben, mit einzeln ermittelten Sonderdrehmomenten behandelt werden. Auch Verschraubungen mit einem höheren Drehmoment sind möglich. Dies ergibt sich durch die Einpressmutter gegenüber einem Gewinde, das in das Kupfer eingebracht wurde. Weiter ist das Stufenloch direkt auch bei anderen weichen Materialien, wie beispielsweise Aluminium, anwendbar. Es müssen keine neuen Drehmomente, Durchmesser oder Mindesteinschraubtiefen im Versuch oder im Labor ermittelt werden. Des Weiteren müssen keine Scheiben einzeln aufgefädelt werden. Dies vermeidet Fehler in der Montage, so dass diese effektiver wird. Darüber hinaus ist das Stufenloch, im Gegensatz zu den Durchzügen, mit den geeigneten Werkzeugen von beiden Stanzrichtungen herstellbar. Ferner ist das Gewinde der Setzmuttern fester und hält auch im Reparaturfall mehr Schraubvorgänge aus, als ein Gewinde in Kupfer.

Einen besonderen Vorteil bietet der Einsatz der Kupferstromschiene mit einem Stufenloch in Stromrichtern. Durch die schnellen Schalthandlungen des Stromrichters in einem Bereich von mehreren Kilohertz (kHz) oder darüber ist der Einsatz von Stromschienen vorteilhaft, da diese niederinduktiv sind und damit störende Spannungen aufgrund von Schalthandlungen reduzieren oder vermeiden. Durch die räumliche Enge ist es dabei vielfach notwendig, einen Übergang von Kupferstromschienen auf Kabel zu schaffen. Dieser kann mit der Kupferstromschiene und dem Stufenloch sowie einem Kabelschuh auf einfache Weise realisiert werden.

Erfindungsgemäß ist in die erste Oberfläche im Bereich des Stufenlochs eine Setzmutter derart mittig in das Stufenloch eingepresst, dass der Radius im ersten Bereich einen ersten Radiuswert annimmt und sich zwischen dem ersten Bereich und dem zweiten Bereich eine Stufe im Stufenloch bildet, in dem sich der Radius an einer Grenze von dem ersten Bereich zu dem zweiten Bereich von einem ersten Radiuswert zu einem zweiten Radiuswert derart ändert, dass sich an der Grenze zwischen erstem Bereich und zweitem Bereich eine Auflagefläche parallel zur ersten Oberfläche bildet, und der zweite Radiuswert kleiner ist als der erste Radiuswert, wobei mittels einer Schraube, die von der Seite der zweiten Oberfläche in das Stufenloch einsetzbar ist mittels der Setzmutter, der Kabelschuh an der zweiten Oberfläche befestigbar ist. Durch das Einpressen der Setzmutter verringert sich aufgrund von verdrängtem Material der Kupferstromschiene der Radius und nimmt nach dem Einpressen einen ersten Radiuswert an, der größer ist als der zweite Radiuswert. Am entstandenen Übergang zwischen dem ersten und dem zweiten Bereich weist der Wert des Radius somit einen Sprung auf, so dass hierdurch eine Auflagefläche gebildet wird, an der die Zahnung des Kragens der Einpressmutter eingreifen kann. Durch das Einpressen der Mutter kann eine besonders gute Verbindung zwischen Setzmutter und Kupferstromschiene erreicht werden und mit dem Material der Setzmutter steht nun eine Verbindungsmöglichkeit zur Verfügung die eine hohe Kraft, bzw. ein hohes Drehmoment aufnehmen kann. Dadurch lassen sich entsprechend kurze Schraubverbindungen realisieren, mit denen die Stromschiene befestigt und/oder kontaktiert werden kann.

Bei einer weiteren vorteilhaften Ausgestaltung der Erfindung grenzt der zweite Bereich an den dritten Bereich, wobei die Kupferstromschiene im dritten Bereich einen Konus aufweist, wobei der Konus an der Grenze zum zweiten Bereich den zweiten Radiuswert aufweist. Dabei kann der Konus sich vollständig über den dritten Bereich erstrecken oder nur über einen Teil des dritten Bereichs. Falls der Konus sich nur über einen Teil des dritten Bereichs erstreckt kann vorteilhafterweise an der Grenze zur zweiten Oberfläche noch ein zylinderförmiger Abschnitt mit konstantem Radius mit einem dritten Radiuswert vorhanden sein. Dies ist insbesondere in dicken Kupferstromschienen sinnvoll. Mit dieser Anordnung können die Fertigungskräfte verringert und die Werkzeugstandzeiten erhöht werden.

Bei einer weiteren vorteilhaften Ausgestaltung der Erfindung grenzt der zweite Bereich an den dritten Bereich, wobei der Radius des Stufenlochs innerhalb des ersten, zweiten und dritten Bereichs jeweils konstant ist. Mit dieser Geometrie kann in wenigen Schritten unter Verwendung eines Stanzwerkzeugs dieses Stufenloch einfach in eine Kupferstromschiene eingebracht werden. Besonders vorteilhaft ist es beim Einbringen, wenn der erste und der zweite Bereich den gleichen Radiuswert aufweisen und der dritte Radiuswert im dritten Bereich geringer ist. Erst mit dem Einbringen der Setzmutter bildet sich im ersten Bereich ein erster Radiuswert aus, der größer als der zweite Radiuswert im zweiten Bereich. Insbesondere der konstante Radius im dritten Bereich verleiht der Kupferstromschiene an der zweiten Oberfläche in der Umgebung, an der der Kabelschuh befestigt wird, eine besonders hohe Stabilität.

Bei einer weiteren vorteilhaften Ausgestaltung der Erfindung weist die Kupferstromschiene eine Dicke im Bereich von 4 mm bis 6 mm auf, wobei der dritte Bereich eine Länge von mindestens 2 mm aufweist, wobei der dritte Radiuswert einen Wert im Bereich zwischen 2,15 mm und 2,4 mm aufweist. Diese Ausgestaltung eignet sich im Besonderen für den Einsatz in einem Stromrichter. Als Verschraubung kommt dabei eine M4-Verbindung zum Einsatz. In der damit herstellbaren Leistungsklasse mit einer Stufenloch-Geometrie für M4-Verbindungen ist diese Verbindung hier wesentlich kostengünstiger und zuverlässiger herstellbar im Vergleich zu bereits bekannten Verbindungsarten. Darüber hinaus können für die Herstellung der Verbindung analog auch andere Schrauben-Größen eingesetzt werden.

Bei einer weiteren vorteilhaften Ausgestaltung der Erfindung weist die Kupferstromschiene eine Vertiefung auf, wobei im Bereich der Vertiefung eine Dicke der Kupferstromschiene auf eine verringerte Dicke derart reduziert wird, dass sich die Setzmutter vollständig in dem Stufenloch und der Vertiefung befindet. Damit können hervorstehende Teile der Setzmutter und ggf. auch hervorstehende Teile der Schraube vermieden werden. Dies senkt das Verletzungsrisiko bei der Montage, ohne hierfür einen höheren Aufwand bei der Montage zu erzeugen. Als besonders vorteilhat hat es sich erwiesen, wenn auch die Schraube in der Vertiefung verschwindet und diese nicht überragt. Damit können Verletzungen beim Hantieren mit der Kupferstromschiene auf einfache Weise verhindert werden.

Im Folgenden wird die Erfindung anhand der in den Figuren dargestellten Ausführungsbeispiele näher beschrieben und erläutert. Es zeigen:
- FIG 1: eine Kupferstromschiene mit einem Stufenloch,
- FIG 2: ein Kontaktsystem mit einem befestigten Kabelschuh und
- FIG 3: ein Kontaktsystem mit einer Vertiefung.

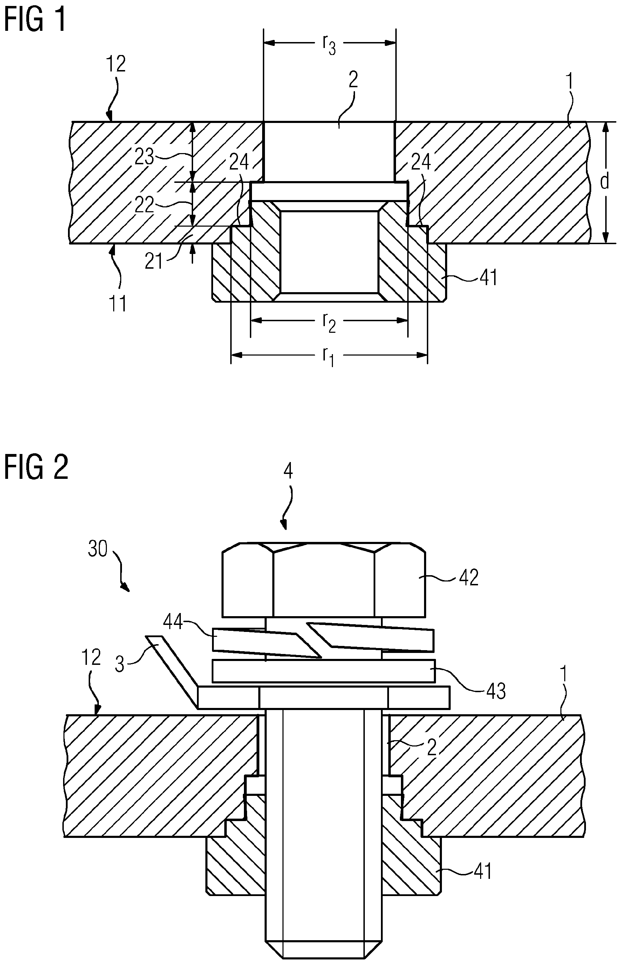

In FIG 1 ist ein Ausschnitt aus einer Kupferstromschiene 1 mit einem Stufenloch 2 gezeigt. Die Kupferstromschiene 1 kann dabei ein oder mehrere Stufenlöcher 2 aufweisen. Die Kontur des Stufenlochs 2 ist in der Figur mit einer dickeren Strichstärke dargestellt. Die Kupferstromschiene 1 umfasst eine erste Oberfläche 11 und eine zweite Oberfläche 12. Üblicherweise verlaufen die erste Oberfläche 11 und die zweite Oberfläche 12 parallel zueinander. Der Abstand der beiden Oberflächen 11,12 ist die Dicke d der Kupferstromschiene 1. Das Stufenloch 2 erstreckt sich durch das Innere der Kupferstromschiene 1 von der ersten Oberfläche 11 zur zweiten Oberfläche 12. Zur Herstellung einer Verbindung mit einem hier nicht dargestellten Kabelschuh 3 wird von der Seite der ersten Oberfläche 11 eine Setzmutter 41, auch als Einpressmutter bezeichnet, in das Stufenloch 2 eingeführt. Die Setzmutter 41 liegt mit ihrer Zahnung, die an ihrem Kragen eingearbeitet ist, auf einer Auflagefläche 24 auf. Die Auflagefläche 24 wird im Übergang vom ersten Bereich 21 zum zweiten Bereich 22 durch einen Sprung im Wert des Radius r von einem ersten Radiuswert r₁ zu einem zweiten Radiuswert r₂ erreicht. Im zweiten Bereich 22 ist es vorteilhaft, wenn der Radius über die gesamte Länge des zweiten Bereichs 22 einen konstanten Wert annimmt, um in diesem zweiten Bereich 22 die Setzmutter 41 beim Einsetzen zu führen und in der Kupferstromschiene 1 zu zentrieren. Im ersten Bereich 21 bildet sich der erste Radiuswert mit dem Einbringen der Setzmutter 41. Vor dem Einbringen kann der Radiuswert im ersten Bereich einen anderen Wert, beispielsweise den zweiten Radiuswert r₂, aufweisen. Eine vorteilhafte Wahl des dritten Radiuswertes r₃ wird anhand der FIG 2 näher beschrieben. In diesem Ausführungsbeispiel sind die Radien über die einzelnen Bereiche 21, 22, 23 jeweils konstant. Dies ist nicht zwingend erforderlich, erlaubt aber eine besonders günstige Fertigung durch Stanzen, da hier nur einfache Standardwerkzeuge auf der Stanzmaschine benötigt werden. Dabei ist es besonders vorteilhaft, beim Stanzen des Stufenlochs im ersten und zweiten Bereich 21, 22 den gleichen Radiuswert vorzusehen und im dritten Bereich 23 einen dritten Radiuswert vorzusehen, der kleiner ist als der zweite Radiuswert r₂. Der größere Radius im ersten Bereich 21 mit dem ersten Radiuswert r₁ ergibt sich dann beim Einbringen der Setzmutter 41.

Um das Einbringen der Setzmutter 41 in der Montage zu vereinfachen kann auch bei der Herstellung des Stufenlochs im ersten Bereich bereits ein größerer Radius als der zweite Radiuswert r₂ vorgesehen werden.

Es ist darüber hinaus möglich, den dritten Bereich ganz oder zumindest abschnittsweise als Konus auszubilden. Der Konus bildet einen Übergang vom Radius mit dem zweiten Radiuswert r₂ an der Grenze zwischen dem zweiten Bereich 22 und dem dritten Radiuswert r₃. Der dritte Radiuswert wird dabei beispielsweise an der Oberfläche 12 erreicht oder im Innern der Kupferstromschiene so dass sich noch ein zylinderförmiger Abschnitt zwischen Konus und Oberfläche 12 anschließt.

Die FIG 2 zeigt die Kupferstromschiene 1 mit einer in das Stufenloch 2 eingebrachten Schraubverbindung 4. Kupferstromschiene 1 und Schraubverbindung 4 stellen zusammen mit dem Kabelschuh 3 ein Kontaktsystem 30 dar. Zur Vermeidung von Wiederholungen wird auf die Beschreibung zur FIG 1 und die dort eingeführten Bezugszeichen verwiesen. Die hier dargestellte Schraubverbindung 4 umfasst in diesem Ausführungsbeispiel die Setzmutter 41, eine Schraube 42, den Kabelschuh 3, eine Scheibe 43 und einen Federring 44. Mit dieser Schraubverbindung 4 wird der Kabelschuh an der zweiten Oberfläche 12 der Kupferstromschiene zuverlässig befestigt. Aber auch andere Systeme mit beispielsweise Klemmscheiben-Paaren oder mit einfacher Scheibe und mechanisch/chemischer Schraubensicherung im Setzmutter-Gewinde sind möglich. Selbst einfache Verschraubungen ohne Unterlegteile, oder mit einfacher Scheibe ohne zusätzliche Sicherung sind möglich. Insbesondere sind diese dann möglich, wenn die Anforderungen durch die Umweltbedingungen, beispielsweise durch Vibrationen, eine solche Verbindung zulassen.

Der dritte Radiuswert r₃ wird dabei in vorteilhafter Weise so gewählt, dass die Schraube 42 ohne Kraftaufwand, insbesondere ohne Berührung der Kupferwand, in das Stufenloch 2 von der zweiten Oberfläche 12 aus eingeführt werden kann. Je kleiner der Radiuswert r₃, desto geringer ist die Gefahr, dass sich der Kabelschuh 3 durch den Anpressdruck der Schraubverbindung 4 beim Anliegen an Teilen der zweiten Oberfläche 12 verbiegt oder deformiert. Somit wird der Radius im dritten Bereich möglichst klein gewählt, insbesondere klein im Verhältnis zum dritten Radiuswert r₃, so dass gerade die Schraube 42 noch durch den dritten Bereich 23 einsetzbar ist. Ein konstanter Radius über den gesamten dritten Bereich 23 hat den Vorteil, dass die Kupferstromschiene 1 im Bereich des Kabelschuhs 3 dann eine hohe Stabilität und Festigkeit aufweist. Somit wird ein Kontakt zum Kabelschuh 3 über die gesamte Fläche des Kabelschuhs, zumindest über einen Großteil der Fläche des Kabelschuhs 3, hergestellt, so dass damit neben der hohen Stabilität der Verbindung auch hohe Stromstärken möglich sind.

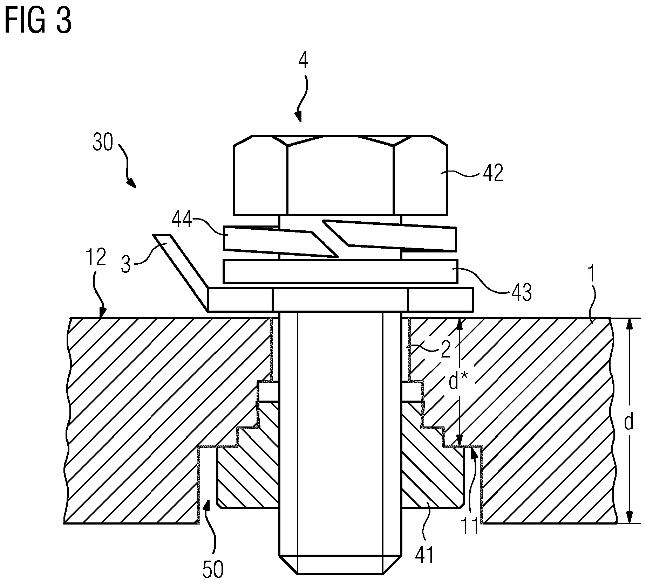

Die FIG 3 zeigt ein Ausführungsbeispiel eines Kontaktsystems 30, wobei die Kupferstromschiene 1 eine Vertiefung 50 aufweist. Diese Vertiefung 50 ist derart ausgeführt, dass die Setzmutter 41 nicht aus der ersten Oberfläche 11 herausragt, an der die Kupferstromschiene 1 eine Dicke d aufweist. An der Vertiefung 50 selbst ist die erste Oberfläche nach innen versetzt, so dass die Kupferstromschiene hier nur eine verringerte Dicke d* aufweist und die Setzmutter 41 sich vollständig in der Vertiefung 50 und dem Stufenloch 2 befindet. Besonders vorteilhaft ist es darüber hinaus, wenn auch die Schraube 42 nicht aus der Vertiefung hervorragt, da dadurch beispielsweise Verletzungen beim Hantieren/Warten der Kupferstromschiene 1 vermieden werden können. Zur Vermeidung von Wiederholungen wird auf die Beschreibung zu den Figuren 1 und 2 sowie auf die dort eingeführten Bezugszeichen verwiesen.

Zusammenfassend betrifft die Erfindung eine Kupferstromschiene. Zur Verbesserung der Verbindbarkeit mit einem Kabelschuh wird vorgeschlagen, dass die Kupferstromschiene mindestens ein Stufenloch zur Befestigung eines Kabelschuhs mittels einer Schraubverbindung aufweist, wobei sich das Stufenloch von einer ersten Oberfläche der Kupferstromschiene zu einer zweiten Oberfläche der Kupferstromschiene erstreckt, wobei das Stufenloch mindestens einen ersten Bereich, einen zweiten Bereich und einen dritten Bereich aufweist, wobei der erste Bereich des Stufenlochs an die erste Oberfläche grenzt, wobei der Radius des Stufenlochs über die Länge des zweiten Bereichs mit dem zweiten Radiuswert konstant ist, wobei der dritte Bereich an die zweite Oberfläche grenzt, wobei der dritte Bereich zumindest an der zweiten Oberfläche einen Radius mit einem dritten Radiuswert aufweist, wobei der dritte Radiuswert kleiner ist als der zweite Radiuswert. Weiter betrifft die Erfindung ein Kontaktsystem mit einer solchen Kupferstromschiene, sowie einen Stromrichter mit einer solchen Kupferstromschiene oder einem solchen Kontaktsystem. Ferner betrifft die Erfindung ein Herstellverfahren für eine solche Kupferstromschiene.

## Patentansprüche

1. Anordnung umfassend eine Kupferstromschiene (1) und eine Setzmutter (41), wobei die Kupferstromschiene (1) mindestens ein Stufenloch (2) zur Befestigung eines Kabelschuhs (3) mittels einer Schraubverbindung (4) aufweist, wobei sich das Stufenloch (2) von einer ersten Oberfläche (11) der Kupferstromschiene (1) zu einer zweiten Oberfläche (12) der Kupferstromschiene (1) erstreckt, wobei das Stufenloch (2) mindestens einen ersten Bereich (21), einen zweiten Bereich (22) und einen dritten Bereich (23) aufweist, wobei der erste Bereich (21) des Stufenlochs (2) an die erste Oberfläche (11) grenzt, wobei der Radius des Stufenlochs (2) über die Länge des zweiten Bereichs (22) mit dem zweiten Radiuswert (r₂) konstant ist, wobei der dritte Bereich (23) an die zweite Oberfläche (12) grenzt, wobei der dritte Bereich (23) zumindest an der zweiten Oberfläche (12) einen Radius mit einem dritten Radiuswert (r₃) aufweist, wobei der dritte Radiuswert (r₃) kleiner ist als der zweite Radiuswert (r₂), wobei in die erste Oberfläche (11) im Bereich des Stufenlochs (2) die Setzmutter (41) derart mittig in das Stufenloch (2) eingepresst ist, dass der Radius im ersten Bereich einen ersten Radiuswert (r₁) annimmt und sich zwischen dem ersten Bereich (21) und dem zweiten Bereich (22) eine Stufe im Stufenloch (2) bildet, in dem der Radius an einer Grenze von dem ersten Bereich (21) zu dem zweiten Bereich (22) von einem ersten Radiuswert (r₁) zu einem zweiten Radiuswert (r₂) einen Sprung aufweist, so dass sich an der Grenze zwischen erstem Bereich (21) und zweitem Bereich (22) eine Auflagefläche (24) parallel zur ersten Oberfläche (11) bildet, an der die Zahnung des Kragens der Setzmutter (41) eingreift, und der zweite Radiuswert (r₂) kleiner ist als der erste Radiuswert (r₁), wobei mittels einer Schraube (42), die von der Seite der zweiten Oberfläche (12) in das Stufenloch (2) einsetzbar ist, mittels der Setzmutter (41) der Kabelschuh (3) an der zweiten Oberfläche (12) befestigbar ist.

2. Anordnung nach Anspruch 1, wobei der zweite Bereich (22) an den dritten Bereich (23) grenzt, wobei die Kupferstromschiene (1) im dritten Bereich einen Konus aufweist, wobei der Konus an der Grenze zum zweiten Bereich den zweiten Radiuswert aufweist.

3. Anordnung nach Anspruch 1, wobei der zweite Bereich (22) an den dritten Bereich (23) grenzt und wobei der Radius des Stufenlochs innerhalb des ersten, zweiten und dritten Bereichs (21,22,23) jeweils konstant ist.

4. Anordnung nach einem der Ansprüche 1 bis 3, wobei die Kupferstromschiene (1) eine Dicke im Bereich von 4 mm bis 6 mm aufweist, wobei der dritte Bereich (23) eine Länge von mindestens 2 mm aufweist, wobei der dritte Radiuswert (r₃) einen Wert im Bereich zwischen 2,15 mm und 2,4 mm aufweist.

5. Anordnung nach einem der Ansprüche 1 bis 4, wobei die Kupferstromschiene (1) eine Vertiefung (50) aufweist, wobei im Bereich der Vertiefung (50) eine Dicke (d) der Kupferstromschiene auf eine verringerte Dicke (d*) derart reduziert wird, dass sich die Setzmutter (41) vollständig in dem Stufenloch (2) und der Vertiefung (50) befindet.

6. Kontaktsystem (30) mit einer Anordnung nach einem der Ansprüche 1 bis 5, einem Kabelschuh (3) und einer Schraubverbindung (4), wobei die Schraubverbindung (4) die Setzmutter (41) und eine Schraube (42) umfasst, wobei mittels der Schraube (42), die von der Seite der zweiten Oberfläche (12) in das Stufenloch (2) eingeführt ist, und mittels der Setzmutter (41), die von der Seite der ersten Oberfläche (11) in das Stufenloch (2) eingepresst ist, der Kabelschuh (3) durch Verschrauben der Schraubverbindung (4) an der zweiten Oberfläche (12) befestigt ist.

7. Stromrichter mit einer Anordnung nach einem der Ansprüche 1 bis 5 oder einem Kontaktsystem (30) nach Anspruch 6, wobei mittels der Kupferstromschiene (1) ein elektrischer Anschluss des Stromrichters und ein Halbleiterschalter des Stromrichters elektrisch miteinander verbunden sind.

## Claims

1. Arrangement comprising a copper busbar (1) and a self-clinching nut (41), wherein the copper busbar (1) has at least one stepped hole (2) for fastening a cable shoe (3) by means of a screw connection (4), wherein the stepped hole (2) extends from a first surface (11) of the copper busbar (1) to a second surface (12) of the copper busbar (1), wherein the stepped hole (2) has at least a first region (21), a second region (22) and a third region (23), wherein the first region (21) of the stepped hole (2) adjoins the first surface (11), wherein the radius of the stepped hole (2) is constant over the length of the second region (22) having the second radius value (r₂), wherein the third region (23) adjoins the second surface (12), wherein the third region (23) has, at least at the second surface (12), a radius having a third radius value (r₃), wherein the third radius value (r₃) is less than the second radius value (r₂), wherein the self-clinching nut (41) is pressed into the first surface (11) in the vicinity of the stepped hole (2) centrally into the stepped hole (2) in such a way that the radius in the first region assumes a first radius value (r₁) and a step is formed between the first region (21) and the second region (22) in the stepped hole (2), in which the radius at a boundary from the first region (21) to the second region (22) has a jump from a first radius value (r₁) to a second radius value (r₂), so that a seating surface (24) is formed parallel to the first surface (11) at the boundary between first region (21) and second region (22), with which the toothing of the collar of the self-clinching nut (41) engages, and the second radius value (r₂) is less than the first radius value (r₁), wherein the cable shoe (3) can be fastened to the second surface (12) by means of a screw (42), which can be inserted into the stepped hole (2) from the side of the second surface (12), by means of the self-clinching nut (41) .

2. Arrangement according to claim 1, wherein the second region (22) adjoins the third region (23), wherein the copper busbar (1) has a cone in the third region, wherein the cone has the second radius value at the boundary to the second region.

3. Arrangement according to claim 1, wherein the second region (22) adjoins the third region (23) and wherein the radius of the stepped hole is constant in each case within the first, second and third region (21,22,23).

4. Arrangement according to one of claims 1 to 3, wherein the copper busbar (1) has a thickness in the range of 4 mm to 6 mm, wherein the third region (23) has a length of at least 2 mm, wherein the third radius value (r₃) has a value in the range between 2.15 mm and 2.4 mm.

5. Arrangement according to one of claims 1 to 4, wherein the copper busbar (1) has a recess (50), wherein a thickness (d) of the copper busbar is reduced in the vicinity of the recess (50) to a lesser thickness (d*) in such a way that the self-clinching nut (41) is located completely in the stepped hole (2) and the recess (50).

6. Contact system (30) having an arrangement according to one of claims 1 to 5, a cable shoe (3) and a screw connection (4), wherein the screw connection (4) comprises the self-clinching nut (41) and a screw (42), wherein the cable shoe (3) is fastened to the second surface (12) by means of the screw (42), which is introduced into the stepped hole (2) from the side of the second surface (12), and by means of the self-clinching nut (41), which is pressed in into the stepped hole (2) from the side of the first surface (11), by screwing of the screw connection (4).

7. Converter having an arrangement according to one of claims 1 to 5 or a contact system (30) according to claim 6, wherein an electrical termination of the converter and a semiconductor switch of the converter are electrically interconnected by means of the copper busbar (1).

## Revendications

1. Ensemble comprenant une barre (1) conductrice en cuivre et un écrou (41) de pose, la barre (1) conductrice en cuivre ayant au moins un trou (2) à degrés pour la fixation d'une cosse (3) de câble au moyen d'un vissage (4), le trou (2) à degrés s'étendant d'une premier surface (11) de la barre (1) conductrice en cuivre à une deuxième surface (12) de la barre (1) conductrice en cuivre, le trou (2) à degrés ayant au moins une première partie (21), une deuxième partie (22) et une troisième partie (23), la première partie (21) du trou (2) à degrés étant voisine de la première surface (11), le rayon du trou (2) à degrés étant constant sur la longueur de la deuxième partie (22), en ayant la deuxième valeur (r₂) de rayon, la troisième partie (23) étant voisine de la deuxième surface (12), la troisième partie (23) ayant, au moins sur la deuxième surface (12), un rayon ayant une troisième valeur (r₃) de rayon, la troisième valeur (r₃) de rayon étant plus petite que la deuxième valeur (r₂) de rayon, dans lequel, dans la première surface (11), dans la partie du trou (2) à degrés, l'écrou (41) de pose est enfoncé au milieu dans le trou (2) à degrés, de manière à ce que le rayon dans la première partie prenne une première (r₁) de rayon et forme, entre la première partie (21) et la deuxième partie (22), un degré dans le trou (2) à degrés, dans lequel le rayon a, à une limite de la première partie (21) à la deuxième partie (22), un saut d'une première valeur (r₁) de rayon à une deuxième valeur (r₂) de rayon, de manière à former, parallèlement à la première surface (11), à la limite entre la première partie (21) et la deuxième partie (22), une surface (24) de support où la denture de la collerette de l'écrou (41) de pose pénètre et la deuxième valeur (r₂) de rayon est plus petite que la première valeur (r₁) de rayon, dans lequel, au moyen d'une vis (42), qui peut être insérée par le côté de la deuxième surface (12) dans le trou (2) à degrés, on peut, au moyen de l'écrou (41) de pose, fixer la cosse (3) de câble à la deuxième surface (12).

2. Ensemble suivant la revendication 1, dans lequel la deuxième partie (22) est voisine de la première partie (23), la barre (1) conductrice en cuivre ayant, dans la troisième partie, un cône, le cône ayant, à la limite avec la deuxième partie, la deuxième valeur de rayon.

3. Ensemble suivant la revendication 1, dans lequel la deuxième partie (22) est voisine de la troisième partie (23) et dans lequel le rayon du trou à degrés, dans la première, deuxième et troisième parties (21, 22, 23), est, respectivement, constant.

4. Ensemble suivant l'une des revendications 1 à 3, dans lequel la barre (1) conductrice en cuivre a une épaisseur dans la partie de 4 mm à 6 mm, la troisième partie (23) a une longueur d'au moins 2 mm, dans lequel la troisième valeur (r3) de rayon a une valeur dans la plage comprise entre 2,15 mm et 2,4 mm.

5. Ensemble suivant l'une des revendications 1 à 4, dans lequel la barre (1) conductrice en cuivre a un creux (50), dans lequel, dans la partie du creux (50), une épaisseur (d) de la barre conductrice en cuivre est réduite à une épaisseur (d*) diminuée, de manière à ce que l'écrou (41) de pose se trouve complètement dans le trou (2) à degrés et dans le creux (50).

6. Système (30) de contact ayant un ensemble suivant l'une des revendications 1 à 5, une cosse (3) de câble et un vissage (4), le vissage (4) comprenant l'écrou (41) de pose et une vis (42), dans lequel, au moyen de la vise (42), qui est insérée par le côté de la deuxième surface (12) dans le trou (2) à degrés et au moyen de l'écrou (41) de pose, qui est enfoncé par le côté de la première surface (11) dans le trou (2) à degrés, la cosse (3) de câble peut être fixée à la deuxième surface (12) en vissant le vissage (4).

7. Onduleur ayant un ensemble suivant l'une des revendications 1 à 5 ou un système (30) de contact suivant la revendication 6, dans lequel, une borne électrique de l'onduleur et un interrupteur à semi-conducteur de l'onduleur sont reliés électriquement entre eux au moyen de la barre (1) conductrice en cuivre.
